# FASCICULE DE BREVET EUROPEEN

(11) **EP 0 843 811 B1**
(45) Date de publication et mention de la délivrance du brevet: **31.07.2002**
(21) Numéro de dépôt: 96924927.5
(22) Date de dépôt: 03.07.1996
(51) Int. Cl.: G01N 21/21

(54) **DISPOSITIF ELLIPSOMETRE A HAUTE RESOLUTION SPATIALE**
ELLIPSOMETER MIT HOHER RÄUMLICHER AUFLÖSUNG
HIGH SPATIAL RESOLUTION ELLIPSOMETRY DEVICE

(30) Priorité: 11.08.1995 FR 9509779
(43) Date de publication de la demande: 27.05.1998
(73) Titulaire: Société de Production et de Recherches Appliquées, 92270 Bois-Colombes (FR)
(72) Inventeur: PIEL, Jean-Philippe, F-78160 Marly-le-Roi (FR); STEHLE, Jean-Louis, F-92200 Colombes (FR); ZAHORSKI, Dorian, F-92170 Vanves (FR)
(74) Mandataire: Plaçais, Jean-Yves
(86) Numéro de dépôt international: FR9601035
(87) Numéro de publication internationale: WO9707392

(56) Documents cités:
- FR-A- 2 602 338
- JOURNAL OF APPLIED PHYSICS, 1 AUG. 1986, USA, vol. 60, no. 3, ISSN 0021-8979, pages 859-873, XP000579985 ERMAN M ET AL: "Spatially resolved ellipsometry"
- REVIEW OF SCIENTIFIC INSTRUMENTS, MAY 1985, USA, vol. 56, no. 5, pt.1, ISSN 0034-6748, pages 687-690, XP000579982 NEDERPEL P Q J ET AL: "Magneto-optical ellipsometer"
- LASER UND OPTOELEKTRONIK, vol. 24, no. 2, 1 Avril 1992, pages 63-67, XP000261188 BRINGS R: "VORSTELLUNG EINES NEUEN SPEKTROSKOPISCHEN PHASENMODULIERTEN ELLIPSOMETERS FUER IN-SITU- UND EX-SITU-ANWENDUNGEN"

## Description

L'invention se rapporte au domaine de l'ellipsométrie, et plus particulièrement à l'ellipsométrie spectroscopique.

Elle trouve une application générale dans tout domaine dans lequel l'ellipsométrie est utilisée, et plus particulièrement, en micro-électronique dans le contrôle optique d'un traitement de surface par laser, tel que le recuit d'échantillons en silicium amorphe par laser excimère. Elle trouve ainsi une application particulière dans la fabrication de composants constitués d'au moins une couche de silicium amorphe déposée sur un substrat de verre. Elle trouve aussi une application dans le nettoyage, le polissage et la préparation de surface, notamment.

Dans le brevet FR-A-2602338 et dans l'article: JOURNAL OF APPLIED PHYSICS, 1 Aug. 1986, US, vol.60, no3, ISSN 0021-8979, pages 859-873, XP00579985, M. ERMAN et al, "Spatially resolved ellipsometry"; un ellipsomètre comprend de façon générale une source lumineuse, un porte-échantillon, un photodétecteur, un premier système optique, monté entre la source lumineuse et le porte-échantillon, et un second système optique monté entre le porte-échantillon et le photodétecteur. Le premier système optique illumine l'échantillon supporté par le porte-échantillon, sous incidence oblique, par un faisceau de lumière polarisée. Le second système optique recueille la lumière renvoyée par l'échantillon. En pratique, des premiers moyens de focalisation, associés au premier système optique, focalisent le faisceau d'illumination issu dudit premier système optique sur l'échantillon tandis que des seconds moyens de focalisation, associés au second système optique, focalisent le faisceau réfléchi par la surface de l'échantillon sur l'entrée du second système optique.

Dans la Demande de brevet intitulée "Dispositif et procédé de traitement de surface par laser", déposée par la Demanderesse sous le N° 95 09778, et publiée sous le numéro FR-A-2737806 une caractérisation d'un échantillon par ellipsométrie est avantageusement mise en oeuvre dans la fabrication d'écrans à cristaux liquides, afin d'optimiser le processus de recristallisation du silicium par laser en maîtrisant l'application de l'énergie laser à l'aide de la mesure d'ellipsométrie.

Dans une telle fabrication d'écrans à cristaux liquides, le porte-échantillon supporte un échantillon comprenant au moins une couche d'un matériau de type silicium amorphe, d'épaisseur donnée et déposée sur un substrat de verre d'épaisseur donnée. La face avant de l'échantillon reçoit ici le rayonnement d'illumination tandis que la face arrière de l'échantillon est en contact avec le porte-échantillon.

En raison de l'épaisseur du substrat, l'interface entre la face arrière dudit échantillon et le porte-échantillon réfléchit vers le second système optique et le photodétecteur un faisceau de lumière parasite qui peut fausser les mesures d'ellipsométrie.

La présente invention apporte justement une solution à ce problème.

Elle porte sur un dispositif d'ellipsométrie du type décrit ci-avant et qui se caractérise par le fait que les seconds moyens de focalisation reçoivent le rayonnement réfléchi par la face avant de l'échantillon et le focalisent sur le photodétecteur, tandis que les réflexions parasites engendrées par la face arrière de l'échantillon en contact avec le porte-échantillon sont acheminées hors du photodétecteur et par le fait que l'ellipsomètre comprend en outre des moyens de correction optique disposés entre l'analyseur et le photodétecteur et propres à être pilotés pour ajuster finement la position du rayonnement réfléchi utile focalisé par les seconds moyens de focalisation sur le photodétecteur.

Ainsi, dans la fabrication de composants où la couche de silicium à traiter repose sur un substrat de verre; un tel dispositif a l'avantage d'améliorer la qualité de la mesure en réjectant les réflexions parasites et en ajustant finement la position du faisceau réfléchi utile sur le photodétecteur. Il est à noter que dans l'art antérieur mentionné ci-avant, le traitement des échantillons n'est pas confronté au problème résolu selon l'invention dans la mesure où la couche de l'échantillon à traiter ne repose pas sur un substrat transparent.

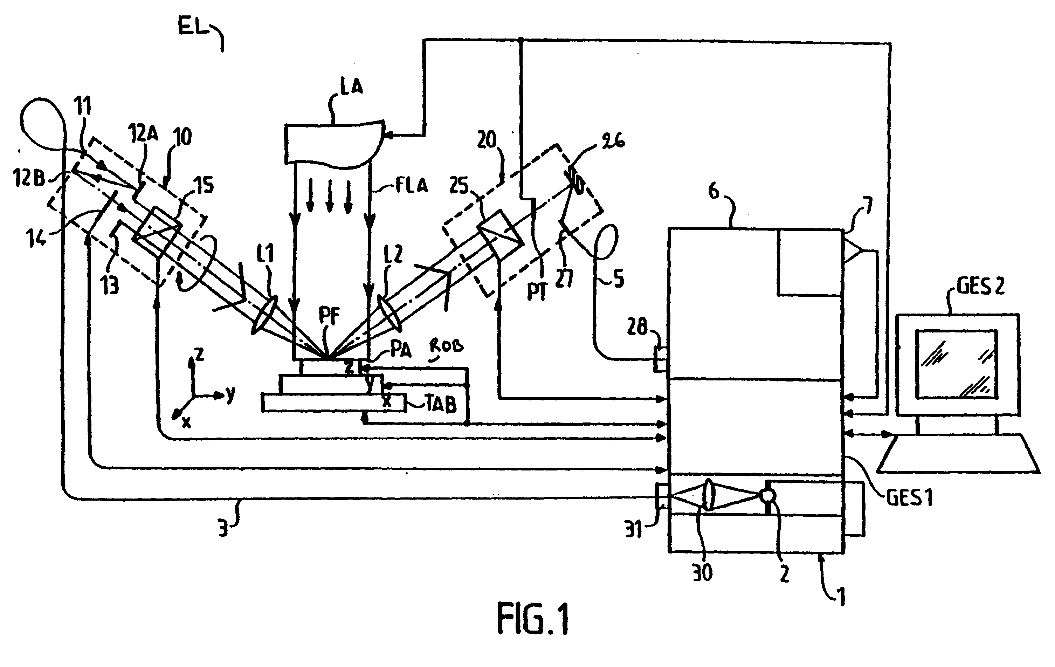

D'autres caractéristiques et avantages de l'invention apparaîtront à la lumière de la description détaillée ci-après et des dessins dans lesquels la figure unique représente schématiquement un ellipsomètre perfectionné selon l'invention.

Sur la figure unique, la référence EL désigne un ellipsomètre spectroscopique, par exemple celui vendu par la Demanderesse, sous la référence commerciale ES4G. Un perfectionnement d'un tel ellipsomètre est décrit dans le Brevet français N° 86 03188 (FR-A-2 595 471).

Une alimentation 1 excite une source de lumière 2 à large bande, telle qu'une lampe à arc au xénon haute pression. Un premier système optique 10, comportant un polariseur 15, transforme le faisceau de lumière issu de la source 2, en un faisceau qui frappe un panneau PA monté sur une table porte-panneau TAB, de préférence mobile suivant trois directions orthogonales X, Y, et Z.

La lumière utile est celle réfléchie par le panneau PA, d'une manière que l'on peut considérer comme symétrique du faisceau incident par rapport à une normale à la surface du panneau.

Cette lumière réfléchie est reprise par un second système optique 20 comprenant un analyseur 25, pour être appliquée à la fente d'entrée d'un monochromateur à prisme 6, susceptible d'accord réglable dans la bande optique de la source de lumière. La lumière issue du monochromateur 6 est appliquée à un photodétecteur 7 comprenant une barrette de photodiodes, par exemple de 512 ou 1024 pixels, permettant d'effectuer la détection en longueur d'onde.

Une électronique de commande GES1 agit:
- sur le polariseur 15, pour commander son influence sur l'état de polarisation du faisceau de lumière incident, par exemple dans le cas d'un polariseur tournant, sa mise en rotation continue,
- sur les moteurs pas à pas associés à la table TAB, pour en commander le déplacement en X-Y-Z,
- sur le robot ROB pour en commander l'extraction d'un panneau du présentoir dans lequel sont rangés lesdits panneaux à traiter, le déplacement du panneau ainsi extrait vers la table porte-panneaux et le positionnement du panneau sur la table à un emplacement choisi, ainsi que la préhension du panneau après traitement et le placement de celui-ci dans le présentoir initial ou un autre présentoir de rangement,
- sur l'obturateur 14, pour en commander le fonctionnement,
- sur l'analyseur 25, pour en commander l'orientation à travers un moteur pas à pas,
- sur le monochromateur 6, pour en définir la longueur d'onde d'accord,
- sur la source laser LA, pour en contrôler la fluence.

Le signal issu du photodétecteur 7 est appliqué aux moyens de gestion GES1, pour être enregistré en relation avec la rotation du polariseur 15, et d'autres données recueillies dont notamment la position du panneau à traiter, celle de l'analyseur et la longueur d'onde à laquelle correspond chaque mesure.

Ces informations, éventuellement prétraitées par l'électronique GES1, sont transmises à des moyens de traitement GES2 tel qu'un micro-ordinateur. En fonction de coordonnées prises sur le panneau (associées à la position frappée à chaque fois par le spot), les moyens de traitement déduisent les informations d'ellipsométrie (par exemple "tangente psi" et "cosinus delta"), puis des courbes représentatives de l'état de surface et/ou de la structure multicouches du panneau à traiter.

Un châssis, de préférence unique, comprend l'alimentation 1 de la lampe au xénon 2, les moyens de gestion GES1, le monochromateur 6, le détecteur 7 et le cas échéant les moyens de traitement GES2.

En pratique, le rayonnement lumineux de la source 2 est transmis par une lentille 30 à un coupleur d'entrée 31 d'une fibre optique 3. Celle-ci rejoint le système optique 10, qui comprend un coupleur de sortie de fibre 11, deux miroirs de renvoi 12A et 12B, un diaphragme de collimation 13, un obturateur 14 et le polariseur 15.

Selon l'invention, le faisceau parallèle issu du polariseur 15 est focalisé par une lentille convergente L1 sur un point focal PF du panneau à traiter, ce qui donne un "spot d'ellipsométrie". La lentille L1 est disposée au niveau du plan objet du panneau.

Symétriquement, le rayonnement réfléchi est focalisé par une autre lentille convergente L2 sur l'analyseur 25. La lentille L2 est disposée au niveau du plan image du panneau. Les lentilles L1 et L2 sont conjuguées optiquement. Elles améliorent la résolution spatiale de l'ellipsomètre comme on le décrira plus en détail ci-après.

Le faisceau de lumière issu de l'analyseur 25 est focalisé par un miroir 26 sur le capteur d'entrée 27 d'une seconde fibre optique 5.

La lumière issue du coupleur de sortie 28 de la fibre optique 5 est reprise par une lentille pour être appliquée sur la fente d'entrée du monochromateur 6.

Dans le cas d'un panneau destiné à réaliser des transistors TFT (Thin film transistor), ce panneau comprend une couche de silicium amorphe d'une épaisseur de l'ordre de 50 nm reposant sur un substrat de verre d'une épaisseur de l'ordre de 0,7 à 1,2 mm. Il a été observé que l'interface entre la face arrière du substrat de verre et son support (table porte-panneau) engendre un faisceau de lumière réfléchi parasite qui peut fausser les mesures d'ellipsométrie. Ce phénomène existe dans de nombreuses autres applications.

Selon l'invention, le montage optique constitué par les lentilles L1 et L2 permet d'éliminer cette réflexion parasite.

En effet, le diamètre du spot issu de la lentille convergente L1 sur la surface du panneau est par exemple de l'ordre de 100 µm. Cette taille est bien inférieure à l'épaisseur moyenne des substrats de verre, habituellement utilisés. La partie utile de la lumière réfléchie par l'échantillon (c'est-à-dire celle relative aux différentes interfaces entre les couches dans l'application recuit par laser) demeure correctement reprise par la lentille convergente L2, pour être amenée ou refocalisée sur la fibre optique 5. Par contre, la position spatiale du spot de lumière due à la réflexion sur la face avant de l'échantillon étant différente de celle du spot de lumière due à la réflexion sur la face arrière de l'échantillon, ce dernier n'est pas (ou nettement moins) ramené par la lentille L2 vers la fibre optique 5, ce qui permet de l'éliminer (ou presque).

Il est en l'espèce inattendu que l'usage de lentilles telles que L1 et L2 pour produire une focalisation sur le faisceau classiquement appliqué à l'échantillon résolve le problème posé : en effet, l'ellipsométrie, technique déjà délicate, le devient encore davantage si l'on veut travailler en haute résolution; et l'on s'attend a priori à des difficultés en altérant lesdits faisceaux classiques.

Dans l'exemple d'application au recuit de panneaux de grande taille, il convient de remarquer que le positionnement des panneaux sur le porte-échantillons TAB dans la direction en Z est une opération critique qu'il convient de maîtriser parfaitement en vue de conserver la haute résolution spatiale du dispositif d'ellipsométrie.

Selon l'invention, cette opération est maîtrisée de la façon suivante.

En premier lieu, la courbure de chaque type de panneaux dans la direction verticale Z est prise en compte en faisant un ajustement en Z du spot d'ellipsométrie. La valeur de l'ajustement est mémorisée en fonction de coordonnées prises sur le panneau (éventuellement par zones sur le panneau). La cartographie du profil de chaque type de panneau est mise en mémoire dans l'ordinateur GES2.

En second lieu, dans le procédé de contrôle du traitement de surface par laser, la position de l'impact du spot de lumière d'analyse sur une zone choisie d'un panneau, ainsi enregistrée et mémorisée, est réutilisée pour la série des panneaux à traiter.

Toutefois, cela n'est pas toujours suffisant car des différences de déformations peuvent intervenir entre différents panneaux de même type.

Selon l'invention, un ajustement fin de la position du spot (faisceau de lumière réfléchi par l'échantillon et focalisé par les lentilles L1 et L2) sur la fibre de sortie 5 est obtenu par inclinaison par rapport au faisceau optique d'une plaque transparente PT (lame à face parallèle) disposée entre l'analyseur 25 et le coupleur d'entrée de la fibre optique 5. Le ou les axes de rotation sont tangents à la surface de la lame. Cette rotation est pilotée par les moyens de gestion GES1 de façon à être toujours au maximum de signal sur la barrette du photodétecteur 7.

## Revendications

1. Dispositif d'ellipsométrie du type comprenant une source lumineuse (2), un porte-échantillon (TAB), un photodétecteur (7), un premier système optique (10) monté entre la source lumineuse (2) et le porte-échantillon (TAB), et comprenant de premiers moyens optiques à polarisation (15), afin d'illuminer un échantillon (PA), sous incidence oblique, par un faisceau de lumière polarisée, un second système optique (20), monté entre le porte-échantillon (TAB) et le photodétecteur (7), et comprenant de seconds moyens optiques à polarisation (25), pour recueillir la lumière renvoyée par l'échantillon (PA), des premiers moyens de focalisation (L1) associés au premier système optique (10) et propres à focaliser le faisceau d'illumination issu dudit premier système optique (10) sur l'échantillon (PA), et des seconds moyens de focalisation (L2) associés au second système optique et propres à focaliser le faisceau réfléchi par la surface de l'échantillon sur l'entrée du second système optique,
**caractérisé en ce que** le porte-échantillon (TAB) supporte un échantillon (PA) comprenant au moins une couche d'un matériau choisi, dont la face avant est propre à recevoir le rayonnement d'illumination, ladite couche étant déposée sur un substrat de verre dont la face arrière est en contact avec le porte-échantillon, **en ce que** les seconds moyens de focalisation (L2) reçoivent le rayonnement réfléchi par la face avant de la couche de l'échantillon (PA) et le focalisent vers le photodétecteur (7), tandis que les réflexions parasites engendrées par la face arrière du substrat de l'échantillon (PA) en contact avec le porte-échantillon (TAB) sont acheminées hors du photodétecteur (7), et **en ce qu'**il comprend en outre des moyens de correction optique (PT), disposés entre les seconds moyens optiques (25) et le photodétecteur (7), et propres à être pilotés pour ajuster finement la position du rayonnement réfléchi utile focalisé par les seconds moyens de focalisation (L2) vers le photodétecteur (7).

2. Dispositif selon la revendication 1, **caractérisé en ce que** les moyens de correction optique comprennent une lame transparente (PT) propre à être inclinée par rapport au faisceau optique réfléchi utile focalisé par les seconds moyens de focalisation (L2) pour ajuster la position dudit faisceau réfléchi utile de façon à être au maximum de signal au niveau du photodétecteur (7).

3. Dispositif selon la revendication 1, **caractérisé en ce que** l'ellipsomètre est spectroscopique.

4. Dispositif selon la revendication 1, **caractérisé en ce que** les premiers moyens de focalisation comprennent une lentille convergente (L1) disposée en aval du premier système optique (10).

5. Dispositif selon la revendication 1, **caractérisé en ce que** les seconds moyens de focalisation comprennent une lentille convergente (L2) disposée en amont du second système optique (20).

6. Dispositif selon l'une des revendications précédentes dans lequel le premier système optique comprend une première fibre optique (3) disposée entre la source lumineuse et le polariseur.

7. Dispositif selon la revendication 1, **caractérisé en ce que** le second système optique (20) comprend une seconde fibre optique (5) disposée entre les seconds moyens optiques à polarisation (25) et le photodétecteur (7), et **en ce que** les moyens de correction optique (PT) sont agencés pour ajuster finement la position du rayonnement réfléchi utile, focalisé par les seconds moyens de focalisation (L2), sur l'entrée de la seconde fibre optique (5).

8. Dispositif selon l'une quelconque des précédentes revendications **caractérisé en ce qu'**il comprend un porte-échantillon (TAB) mobile selon trois directions orthogonales entre elles.

## Claims

1. Ellipsometry device of the type comprising a light source (2), a sample carrier (TAB), a photodetector (7), a first optical system (10) mounted between the light source (2) and the sample carrier (TAB), and comprising first polarising optical means (15) in order to light up a sample (PA) under oblique incidence by a polarised light beam, a second optical system (20) mounted between the sample carrier (TAB) and the photodetector (7), and comprising second polarising light means (25) for collecting the light sent back by the sample (PA), first focusing means (L1) associated with the first optical system (10) and capable of focusing the illuminating beam transmitted by the first optical system (10) on to the sample (PA), and second focusing means (L2) associated with the second optical system and capable of focusing the beam reflected by the sample surface on to the input of the second optical system, **characterised in that** the sample carrier (TAB) carries a sample (PA) comprising at least one coating of a selected material, whose front face is capable of receiving the illuminating radiation, the coating being deposited on a glass substrate whose rear face is in contact with the sample carrier, **in that** the second focusing means (L2) receive the ray reflected by the front face of the sample (PA) coating and focus it towards the photodetector (7), whereas the stray reflections produced by the rear face of the substrate of the sample (PA) in contact with the sample carrier (TAB) are sent outside the photodetector (7), and **in that** it further comprises optical correction means (PT), disposed between the second optical means (25) and the photodetector (7) and capable of being piloted in order to bring about fine adjustment of the position of the useful reflected radiation focused by the second focusing means (L2) towards the photodetector (7).

2. Device according to claim 1, **characterised in that** the optical correction means comprise a transparent plate capable of being inclined relative to the useful reflected optical beam focused by the second focusing means (L2) in order to adjust the position of the useful reflected beam so as to be at signal maximum flush with the photodetector (7).

3. Device according to claim 1, **characterised in that** the ellipsometry device is spectroscopic.

4. Device according to claim 1, **characterised in that** the first focusing means comprise a converging lens (L1) disposed downstream of the first optical system (10).

5. Device according to claim 1, **characterised in that** the second focusing means comprise a converging lens (L2) disposed upstream of the second optical system (20).

6. Device according to one of the preceding claims, wherein the first optical system comprises a first optic fibre (3) disposed between the light source and the polariser.

7. Device according to claim 1, **characterised in that** the second optical system (20) comprises a second optic fibre (5) disposed between the second polarising optical means (25) and the photodetector (7), and **in that** the optical correction means (PT) are adapted to give fine adjustment of the position of the useful reflected radiation focused by the second focusing means (L2) at the entry to the second optic fibre (5).

8. Device according to any one of the preceding claims, **characterised in that** it comprises a sample carrier (TAB) mobile in three directions which are at right angles to one another.

## Patentansprüche

1. Ellipsometer von einem Typ, der folgendes aufweist:
- eine Lichtquelle (2),
- einen Probenträger (TAB),
- einen Photozellendetektor (7),
- ein erstes optisches System (10), das zwischen der Lichtquelle (2) und dem Probenträger (TAB) montiert ist, und
- erste optische Mittel (15) zur Polarisierung, um eine Probe (PA) unter schrägem Einfall durch ein polarisiertes Lichtbündel zu beleuchten,
- ein zweites optisches System (20), das zwischen dem Probenträger (TAB) und dem Photozellendetektor (7) montiert ist, und
- zweite optische Mittel (25) zur Polarisierung, um das durch die Probe (PA) zurückgestrahlte Licht zu sammeln,
- erste Fokussierungsmittel (L1), die dem ersten optischen System (10) zugeordnet und geeignet sind, das von dem ersten optischen System (10) stammende Lichtbündel auf die Probe (PA) zu fokussieren, und
- zweite Fokussierungsmittel (L2), die dem zweiten optischen System zugeordnet und geeignet sind, das durch die Oberfläche der Probe reflektierte Bündel auf den Eingang des zweiten optischen Systems zu fokussieren,
**dadurch gekennzeichnet, dass**
der Probenträger (TAB) eine Probe (PA) trägt, die mindestens eine Schicht eines ausgewählten Materials aufweist, deren Vorderseite geeignet ist, die Lichtstrahlung zu empfangen, wobei die Schicht auf einem Glassubstrat angeordnet ist, dessen Rückseite sich mit dem Probenträger in Kontakt befindet, dass die zweiten Fokussierungsmittel (L2) die durch die Vorderseite der Schicht der Probe (PA) reflektierte Strahlung empfangen und sie in Richtung auf den Photozellendetektor (7) fokussieren, während die durch die Rückseite des Substrats der Probe (PA), die sich in Kontakt mit dem Probenträger (TAB) befindet, erzeugten Störreflexionen außerhalb des Photozellendetektors (7) geleitet werden, und
dass es außerdem optische Korrekturmittel (PT) aufweist, die zwischen den zweiten optischen Mitteln (25) und dem Photozellendetektor (7) angeordnet und geeignet sind, um gesteuert zu werden, um die Position der brauchbaren reflektierten Strahlung feineinzustellen, die durch die zweiten Fokussierungsmittel (L2) in Richtung auf den Photozellendetektor (7) fokussiert wird.

2. Ellipsometer nach Anspruch 1,
**dadurch gekennzeichnet, dass**
die optischen Korrekturmittel eine transparente Platte (PT) aufweisen, die geeignet ist, in bezug auf das brauchbare reflektierte optische Bündel geneigt zu werden, das durch die zweiten Fokussierungsmittel (L2) fokussiert ist, um die Position des brauchbaren reflektierten Bündels einzustellen, so dass sie im Maximum des Signals auf Höhe des Photozellendetektors (7) ist.

3. Vorrichtung nach Anspruch 1,
**dadurch gekennzeichnet, dass**
das Ellipsometer ein spektroskopisches ist.

4. Vorrichtung nach Anspruch 1,
**dadurch gekennzeichnet, dass**
die ersten Fokussierungsmittel eine Sammellinse (L1) aufweisen, die stromabwärts vom ersten optischen System (10) angeordnet ist.

5. Vorrichtung nach Anspruch 1,
**dadurch gekennzeichnet, dass**
die zweiten Fokussierungsmittel eine Sammellinse (L2) aufweisen, die stromaufwärts vom zweiten optischen System (20) angeordnet ist.

6. Vorrichtung nach einem der vorhergehenden Ansprüche, wobei das erste optische System eine erste Lichtleitfaser (3) aufweist, die zwischen der Lichtquelle und dem Polarisator angeordnet ist.

7. Vorrichtung nach Anspruch 1,
**dadurch gekennzeichnet, dass**
das zweite optische System (20) eine zweite Lichtleitfaser (5) aufweist, die zwischen den zweiten optischen Mitteln (25) zur Polarisierung und dem Photozellendetektor (7) angeordnet ist, und dass die optischen Korrekturmittel (PT) angeordnet sind, um die Position der brauchbaren reflektierten Ausstrahlung feineinzustellen, die durch die zweiten Fokussierungsmittel (L2) auf den Eingang der zweiten Lichtleitfaser (5) fokussiert ist.

8. Vorrichtung nach einem der vorhergehenden Ansprüche,
**dadurch gekennzeichnet, dass**
sie einen Probenträger (TAB) aufweist, der in drei Richtungen verstellbar ist, die zueinander orthogonal sind.
